# EUROPÄISCHE PATENTANMELDUNG

(11) **EP 4 641 327 A1**
(43) Veröffentlichungstag der Anmeldung: **29.10.2025**
(21) Anmeldenummer: 24172231.3
(22) Anmeldetag: 24.04.2024
(51) Int. Cl.: G05B 19/05, G05B 9/03

(54) **VERFAHREN ZUR KOPPLUNG VIRTUELLER STEUERUNGEN, COMPUTERPROGRAMM, COMPUTERLESBARES MEDIUM UND GERÄT**

(71) Anmelder: Siemens Aktiengesellschaft, 80333 München (DE)
(72) Erfinder: Grosch, Thomas, 90574 Roßtal (DE)
(74) Vertreter: Siemens Patent Attorneys

(57) **Zusammenfassung**

Die Erfindung betrifft ein Verfahren zur Kopplung von wenigstens zwei auf verschiedenen Geräten, insbesondere Edge-Geräten (A, B), vorgesehenen virtuellen Steuerungen (A.1, A.2, A.3, B.1, B.2, B.3) für einen Redundanzbetrieb, bei dem eine zweistufige Kopplung umfassend eine Kopplung (4) auf Geräteebene und eine anschließende Kopplung (5) auf Steuerungsebene durchgeführt wird, wobei im Rahmen der Kopplung (4) auf der Geräteebene ein Gerät (A, B), auf dem wenigstens eine virtuelle Steuerung (A.1, A.2, A.3, B.1, B.2, B.3) vorgesehen ist, mit wenigstens einem weiteren Gerät (A, B), auf dem wenigstens eine weitere virtuelle Steuerung (A.1, A.2, A.3, B.1, B.2, B.3) vorgesehen ist, gekoppelt wird, und im Rahmen der Kopplung (5) auf der Steuerungsebene eine virtuelle Steuerung (A.1, A.2, A.3, B.1, B.2, B.3), die auf einem der auf Geräteebene gekoppelten Geräte (A, B) vorgesehen ist und/oder wird, mit wenigstens einer weiteren virtuellen Steuerung (A.1, A.2, A.3, B.1, B.2, B.3), die auf wenigstens einem anderen der auf Geräteeben gekoppelten Geräte (A, B) vorgesehen ist, gekoppelt wird. Darüber hinaus betrifft die Erfindung ein Computerprogramm, ein computerlesbares Medium und ein Gerät, insbesondere Edge-Gerät.

## Beschreibung

Die Erfindung betrifft ein Verfahren zur Kopplung von wenigstens zwei, bevorzugt genau zwei, auf verschiedenen Geräten, insbesondere Edge-Geräten, vorgesehenen virtuellen Steuerungen, insbesondere virtuellen PLCs, für einen Redundanzbetrieb. Darüber hinaus betrifft die Erfindung ein Computerprogramm, ein computerlesbares Medium und ein Gerät, insbesondere Edge-Gerät.

Im Automatisierungsumfeld kommen Steuerungen, beispielsweise PLCs, zur Steuerung bzw. Regelung zum Einsatz, etwa in industriellen Maschinen oder Anlagen. Die Abkürzung PLC steht dabei in bekannter Weise für Programmable Logic Controller, ins Deutsche Übersetzt speicherprogrammierbare Steuerung.

Die Anmelderin geht davon aus, dass im Automatisierungsumfeld neben den klassischen, dedizierten Steuerungen, beispielsweise dedizierten PLCs, zukünftig auch virtualisierte Steuerungen breiten Einsatz finden werden.

Der Anmelderin ist bekannt, dass ein übliches Szenario im Zusammenhang mit virtuellen Steuerungen dadurch gegeben ist, dass zwei oder mehr virtuelle Steuerungen auf einer Recheneinheit wie einem Computer, der beispielsweise durch Edge-Gerät gegeben sein kann, vorgesehen sind und parallel ausgeführt werden.

Wenn mehrere virtuelle Steuerungen, mit anderen Worten Steuerungs-Instanzen, auf einer Recheneinheit zur Ausführung gebracht werden, ergibt sich ein grundlegendes Problem. Fällt die Recheneinheit, etwa das Edge-Gerät, aus, fallen mit ihm auch alle auf dem Edge-Gerät ablaufenden virtuellen Steuerungen aus. Dies kann zum Stillstand von großen Teilen einer industriellen Maschine bzw. Anlage führen, für die bzw. in der die virtuellen Steuerungen genutzt werden. Die Anmelderin geht davon aus, dass dies für Anwendern in der Regel nicht tolerierbar sein wird.

Die Zuverlässigkeit einer solchen Installation könnte prinzipiell durch (Hardware-)Redundanz erhöht werden. Ein redundantes System kann nach Einschätzung der Anmelderin beispielsweise aus mindestens zwei Edge-Geräten bestehen, die als redundantes System implementiert bzw. ausgeführt sind. Beispielsweise können sich auf einem Edge-Gerät ablaufende virtuelle PLCs mit einem jeweiligen "Partner" auf dem anderen, dazu redundanten Edge-Gerät synchronisieren. Damit dies überhaupt möglich ist, muss von den bzw. für die virtuellen PLCs aber zunächst ein jeweiliger Partner auf dem anderen, redundanten Edge-Gerät "gefunden" werden. Man kann auch sagen, es muss zunächst eine geräteübergreifende Kopplung bzw. ein geräteübergreifendes "Pairing" von zwei oder mehr auf verschiedenen Geräten befindlichen virtuellen Steuerungen erfolgen. Gekoppelte virtuelle Steuerungen können sich dann geräteübergreifend synchronisieren bzw. synchronisiert werden, um Redundanz zu gewährleisten. Dabei sollte sichergestellt werden, dass sich virtuelle Steuerungen auf dem gleichen Gerät nicht pairen, mit anderen Worten koppeln, da dann keine Hardware-Redundanz erzielt würde.

Es ist daher eine Aufgabe der vorliegenden Erfindung, ein Verfahren der eingangs genannten Art anzugeben, über welches zuverlässig Paare bzw. Gruppen von auf verschiedenen Geräten befindlichen virtueller Steuerungen gefunden werden können, so dass im Anschluss daran eine Synchronisierung zum Erhalt von Redundanz möglich ist, wobei sich das Verfahren mit vertretbarem Aufwand, insbesondere möglichst geringer Netzwerkbelastung und bevorzugt automatisch durchführen lassen soll.

Diese Aufgabe wird gelöst durch ein Verfahren zur Kopplung von wenigstens zwei, bevorzugt genau zwei, auf verschiedenen Geräten, insbesondere Edge-Geräten, vorgesehenen virtuellen Steuerungen, insbesondere virtuellen PLCs, für einen Redundanzbetrieb, bei dem eine zweistufige Kopplung umfassend eine Kopplung auf Geräteebene und eine anschließende Kopplung auf Steuerungsebene durchgeführt wird, wobei im Rahmen der Kopplung auf der Geräteebene ein Gerät, auf dem wenigstens eine virtuelle Steuerung vorgesehen ist und/oder wird, mit wenigstens einem weiteren Gerät, auf dem wenigstens eine weitere virtuelle Steuerung vorgesehen ist und/oder wird, gekoppelt wird, und im Rahmen der Kopplung auf der Steuerungsebene eine virtuelle Steuerung, die auf einem der auf Geräteebene gekoppelten Geräte vorgesehen ist und/oder wird, mit wenigstens einer weiteren virtuellen Steuerung, die auf wenigstens einem anderen der auf Geräteeben gekoppelten Geräte vorgesehen ist und/oder wird, gekoppelt wird.

Der Kern der vorliegenden Erfindung besteht mit anderen Worten in einem hierarchischen, zweistufigen Pairing. Auf der unteren Ebene steht das Pairing der Geräte, die beispielsweise durch Edge-Geräte gegeben sind. Auf der oberen Ebene steht das Pairing der virtuellen Steuerungen, die auch als Steuerungs-Instanzen bezeichnet werden können. In einer ersten Stufe koppeln bzw. "pairen" sich die Geräte, in einer weiteren zweiten Stufe koppeln bzw. "pairen" sich die virtuellen Steuerungen, etwa PLC-Instanzen. Ein Redundanz-Paar aus zwei auf verschiedenen Geräten befindlichen Steuerungs-Instanzen bzw. eine Redundanz-Gruppe aus mehr als zwei auf verschiedenen Geräten befindlichen Steuerungs-Instanzen ist insbesondere erst dann gefunden bzw. steht insbesondere erst dann fest, wenn beide Stufen der erfindungsgemäßen Kopplung, mit anderen Worten des erfindungsgemäßen Pairings erfolgreich abgeschlossen wurden.

Erfindungsgemäß wird die Hierarchie zwischen Gerät und Steuerungs-Applikation, die sich aus der Virtualisierung heraus ergibt, berücksichtigt und ein Pairing auf der gleichen Hardware verhindert. Durch die erfindungsgemäße Lösung wird sichergestellt, dass sich nur virtuelle Steuerungen miteinander koppeln/"pairen", die auf unterschiedlichen Geräten ausgeführt werden.

Der Anmelderin bekannte bisherige Lösungen berücksichtigen die Hierarchie zwischen Edge-Gerät und PLC-Applikation nicht, was ein Pairing auf der gleichen Rechenhardware nicht verhindert.

Im Rahmen der Erfindung kann ein Pairing dabei auch besonders leicht auf bestimmte Geräte, etwa Edge-Geräte, eingeschränkt werden, die z.B. bestimmte Hardware-Anforderungen erfüllen. Die virtuellen Steuerungen, wie PLC-Applikationen, müssen derartige Einschränkungen nicht kennen.

Im Anschluss an eine erfolgreiche Kopplung gemäß der vorliegenden Erfindung können die wenigstens zwei virtuellen Steuerungen insbesondere regelmäßig, etwa zyklisch, synchronisiert werden. Von den wenigstens zwei auf Steuerungsebene gekoppelten virtuellen Steuerung wird dann wenigstens eine zweckmäßiger Weise für die Steuerung bzw. Regelung, etwa in einer industriellen Maschine oder Anlage, genutzt. Fällt eines der Geräte aus, kann umgehend bzw. noch der bzw. einer der Redundanz-Partner auf dem bzw. einen der anderen Geräte genutzt werden. Im Ergebnis steht ein besonders hohes Maß an Sicherheit bereit.

Es sei angemerkt, dass es prinzipiell möglich ist, dass mehr als zwei virtuelle Steuerungen, die auf mehr als zwei verschiedenen Geräten vorgesehen sind, miteinander gekoppelt werden und redundante, synchronisierte "Partner" darstellten, etwa drei oder auch mehr. Der Fall einer 1:1-Redundanz-Beziehung wird jedoch nach Erwartung der Anmelderin besonders üblich sein.

Unter einer virtuellen Steuerung ist insbesondere eine Ablaufumgebung für ein Steuerungsinsbesondere PLC Programm zu verstehen, welche von der konkreten Hardware, insbesondere Rechnerhardware abstrahiert ist und deshalb eine Skalierung der PLC-Funktionalität auf verschieden leistungsfähigen Hardwareplattformen erlaubt. Diese "Virtualisierung" wird auch dazu benutzt, um mehrere Instanzen einer virtuellen Steuerung auf einer entsprechend leistungsfähigen Hardware zum Ablauf zu bringen.

Rein beispielhaft für eine virtuelle Steuerung, konkret eine virtuelle PLC, sei die "Simatic S7-1500V" von Siemens genannt, die in Funktion und Bedienung auf der dedizierten Steuerung "SIMATIC S7-1500 Controller" von Siemens basiert, jedoch von der Hardware abstrahiert ist.

Die Geräte können jeweils einen Computer oder eine Recheneinrichtung umfassen oder dadurch gegeben sein. Es kann sich insbesondere um sogenannte Edge-Geräte handeln, wie sie aus dem Bereich der industriellen Automatisierungstechnik bekannt sind.

Die Geräte können jeweils wenigstens einen virtuellen Switch und/oder wenigstens einen sogenannten Hypervisor aufweisen, der ausgebildet ist, um Rechenleistung auf mehrere auf dem Gerät vorgesehene, insbesondere darauf installierte, virtuelle Steuerungen aufzuteilen und/oder um diesen Zugriff auf Ressourcen des Gerätes, wie z.B. Kommunikations-Schnittstellen, welche über einen virtuellen Switch an die virtuellen Steuerungen angebunden sein können, zu erlauben. Bei den zwei oder mehr virtuellen Steuerungen kann man auch von mehreren Steuerungs-Instanzen, etwa PLC-Instanzen, sprechen.

Die Geräte sind zweckmäßiger Weise hardwaretechnisch separate Einheiten, die bevorzugt beabstandet voneinander, beispielsweise in einer industriellen Anlage, angeordnet sind.

Für die Kopplung auf der Geräteebene kann von den Geräten oder können für die Geräte beispielsweise Geräte-Koppelnachrichten versendet werden. In der Regel wird der Versand von dem jeweiligen Gerät initiiert bzw. abgewickelt werden. Es ist aber auch nicht ausgeschlossen, dass dies von einer von dem bzw. den Geräten separaten, etwa zu diesem Zwecke vorgesehenen, Instanz abgewickelt wird.

Der Versand von Geräte-Koppelnachrichten erfolgt bevorzugt über Redundanz-Schnittstellen, über welche die Geräte miteinander verbunden sind, was sich als besonders geeignet erwiesen hat. Zweckmäßiger Weise werden Geräte-Koppelnachrichten, mit denen eine Kopplung auf Gerätebene initiiert bzw. erzielt werden soll, nur von Geräten bzw. nur für Geräte versendet, die auf Gerätebene nicht gekoppelt sind. Gekoppelte Geräte versenden solche mit andern Worten zweckmäßiger Weise nicht. Nicht gekoppelte Geräte können sowohl bisher noch nicht gekoppelt Geräte sein, als auch Geräte, die schon wenigstens ein Mal gekoppelt waren, aber ihre Kopplung wieder verloren haben. Eine Kopplung kann beispielsweise aufgrund eines Netzwerkfehlers verloren gehen.

Ein Gerät kann sich beispielsweise mit wenigstens einem weiteren Gerät koppeln, wenn es eine von dem oder für das wenigstens eine weitere Gerät gesendete Geräte-Koppelnachricht empfängt und noch nicht auf Geräteebene gekoppelt ist. Die Kopplung auf Gerätebene wird anschließend zweckmäßiger weise durch Versenden einer Geräte-Bestätigungsnachricht an das wenigstens eine weitere Gerät bestätigt. Der Empfang der Geräte-Bestätigungsnachricht kann eine erfolgreiche Kopplung bewirken bzw. abschließen. Die Geräte-Bestätigungsnachricht kann von dem Gerät selber versendet werden oder auch für dieses.

Es kann vorgesehen sein, dass für den Fall, dass wenigstens zwei auf Geräteebene miteinander gekoppelte Geräte ihre Kopplung verlieren, sie den Versand von Geräte-Koppelnachrichten, insbesondere automatisch, wieder aufnehmen, um erneut eine Kopplung mit wenigstens einem weiteren Gerät zu erzielen.

Es ist auch möglich, dass die Geräte-Koppelnachrichten Informationen zu dem jeweiligen Gerät, insbesondere eine Adresse und/oder einen Identifikator und/oder eine Typenangabe des jeweiligen Gerätes, umfassen. Dann gilt in vorteilhafter Weiterbildung, dass sich ein Gerät nur in demjenigen Fall mit wenigstens einem weiteren Gerät auf Geräteebene koppelt, dass eine Überprüfung von in der Geräte-Koppelnachricht enthaltener Information ergeben hat, dass bestimmte Anforderungen von dem wenigstens einen weiteren Gerät erfüllt werden. Beispielsweise kann das Gerät überprüfen, ob das wenigstens ein weitere Gerät, von dem bzw. für das es eine oder mehrere Geräte-Koppelnachrichten empfangen hat, vom selben oder einem kompatiblen Typ ist und nur dann die Kopplung eingehen.

In analoger Weise können die Geräte-Bestätigungsnachrichten Informationen zu dem oder dem jeweiligen weiteren Gerät umfassen, insbesondere eine Adresse dieses, wodurch eine direkte Kommunikation zwischen gekoppelten Geräten erleichtert bzw. möglich wird.

Unter dem jeweiligen Gerät ist hier das Gerät zu verstehen, von dem bzw. für das eine oder mehre Geräte-Koppelnachrichten bzw. Geräte-Bestätigungsnachrichten gesendet werden.

Der Versand von Geräte-Koppelnachrichten und ggf. Geräte-Bestätigungsnachrichten kann z.B. über ein lokales Netzwerk erfolgen, über welches die Geräte verbunden sind. Geräte-Koppelnachrichten können beispielsweise durch Broadcast-Nachrichten gegeben bzw. als solche Ausgebildet sein, mit denen das Netzwerk "geflutet" und so an alle Netzwerkteilnehmer und auch vorhandenen redundanzfähige Geräte verteilt wird.

In weiterer besonders vorteilhafter Ausgestaltung ist vorgesehen, dass für den Fall, dass ein Gerät von mehr als einem weiteren oder für mehr als ein weiteres Gerät, optional des gleichen Typs, Geräte-Koppelnachrichten empfängt, das Gerät in einen Kopplungsfehlerzustand übergeht, in dem es keine Kopplung auf Geräteebene eingeht. Der Kopplungsfehlerzustand des bzw. des jeweiligen Gerätes kann insbesondere automatisch wieder aufgehoben werden, wenn das (jeweilige) Gerät nur noch Geräte-Koppelnachrichten von genau einem weiteren oder für genau ein weiteres Gerät empfängt.

Mit anderen Worten geht ein Redundanz-fähiges (Edge-)Gerät, wenn es mehrere andere Redundanz-fähige (Edge-)Geräte im Netzwerk sieht, bevorzugt automatisch in einen Pairing-Fehlerzustand über und koppelt sich so lange nicht mit anderen Redundanz-fähigen (Edge-Geräten, bis es wieder nur maximal ein weiteres Redundanz-fähiges (Edge-)Gerät im Netzwerk sieht (bedeutet: nur Pairing-Telegramme eines Edge-Gerätes empfängt).

Auf diese Weise wird auf Geräteebene ein 1:1-Pairing von genau einem Gerät, etwa Edge-Gerät, mit genau einem weiteren Gerät, etwa Edge-Gerät, erzielt. Werden von einem Benutzer beispielsweise drei oder mehr Geräte-Koppelnachrichten versendende Geräte an ein lokales Netzwerk angeschlossen bzw. in einem lokalen Netzwerk betrieben, gehen die Geräte in den Kopplungsfehlerzustand und dieser wird erst - bevorzugt automatisch - beendet, wenn alle bis auf genau zwei Geräte entfernt wurden bzw. diese keine Geräte-Koppelnachrichten versenden.

Es ist möglich, dass eine Kopplung auf Gerätebene nur für Geräte des gleichen oder eines kompatiblen Typs vorgesehen ist, Geräte-Koppelnachrichten, die von bzw. für weitere Geräte eines anderen bzw. nicht kompatiblen Typs empfangen werden, hingegen ignoriert werden. Dann wäre ein Fehlerzustand, wenn von mehreren Geräten anderen/nicht kompatiblen Typs ankommen, nicht erforderlich.

Alternativ zu dem 1:1-Szenario redundanter Geräte kann auch vorgesehen sein, dass für den Fall, dass ein Gerät von mehr als einer vorgegebenen Maximalanzahl von zwei oder mehr weiteren oder für mehr als eine vorgegebene Maximalanzahl von zwei oder mehr weiteren Geräten, optional des gleichen Typs, Geräte-Koppelnachrichten empfängt, das Gerät in einen Kopplungsfehlerzustand übergeht, in dem es keine Kopplung auf Geräteebene eingeht, bevorzugt, wobei der Kopplungsfehlerzustand des Gerätes insbesondere automatisch wieder aufgehoben wird, wenn das Gerät nur noch Koppelnachrichten höchstens von der vorgegebene Maximalanzahl oder für die vorgegebene Maximalanzahl weiterer Geräte empfängt. Die vorgegebene Maximalanzahl sind dabei zwei oder mehr andere Geräte, etwa 2, 3, 4, 5, 6, 7 oder mehr Geräte.

Mit anderen Worten entsteht in einer Variante des Pairings auf Geräteebene ein Pairing-Fehler erst dann, wenn ein Redundanz-fähiges (Edge-)Gerät N andere Redundanz-fähige (Edge-)Geräte für N>2 findet. Jedes Redundanz-fähige (Edge-)Gerät ist damit in der Lage, sich mit N-1 Redundanzpartnern zu pairen. Der in praktischen Anwendungen am häufigsten vorkommende Fall ist jedoch das 1-zu-1 Pairing von genau zwei Redundanz-fähigen (Edge-)Geräten.

Als ganz besonders vorteilhaft hat sich erwiesen, wenn auf den Geräten jeweils eine Geräte-Kopplungs-Applikation installiert ist, welche die Kopplung auf Geräteebene durchführt und auch als Geräte-Pairing-Applikation bzw. kurz Geräte-Pairing-App bezeichnet werden kann. Die Geräte-Kopplungs-Applikation kann die Kopplung auf Geräteebene zumindest teilweise, bevorzugt vollständig abwickeln. Beispielsweise kann diese den Versand und Empfang von Geräte-Koppelnachrichten und Geräte-Bestätigungsnachrichten bewirken bzw. für das jeweilige Gerät abwickeln. Zweckmäßiger Weise ist die Geräte-Kopplungs-Applikation auf jedem Redundanz-fähigen (Edge-)Gerät genau einmal vorhanden (installiert). Die Geräte-Kopplungs-Applikation nutzt zum Pairing mit wenigstens einem weiteren Gerät auf Geräteebene bevorzugt Redundanz-Schnittstellen des Gerätes. Ein Pairing kommt insbesondere dann zustande, wenn sich genau zwei Redundanz-fähige (Edge-)Geräte über ihre Redundanz-Schnittstellen Kommunikations-technisch erreichen können (insbesondere mittels den Geräte-Koppelnachrichten in Form von Broadcast-Telegrammen).

Auf Basis der Kopplung in der ersten Stufe, mit anderen Worten auf der Geräteebene, kann dann die Kopplung auf der zweiten Stufe, also die Kopplung auf der Ebene der virtuellen Steuerungen, insbesondere PLCs (Steuerungsebene), durchgeführt werden

Für die Kopplung auf der Steuerungsebene werden von den virtuellen Steuerungen oder für die virtuellen Steuerungen dabei zweckmäßiger Weise Steuerungs-Koppelnachrichten versendet. Dies erfolgt bevorzugt über einen virtuellen Switch des jeweiligen Gerätes und/oder nur von oder für auf Steuerungs-Ebene nicht, insbesondere noch nicht bzw. nicht mehr, gekoppelten virtuellen Steuerungen.

Zweckmäßiger Weise gilt, dass nur von virtuellen Steuerungen Steuerungs-Koppelnachrichten versendet werden, deren Gerät mit wenigstens einem weiteren Gerät auf Geräteebene gekoppelt ist. Mit anderen Worten senden virtuelle Steuerungen von Geräten, die auf Geräteebene nicht gekoppelt sind, zweckmäßiger Weise keine Steuerungs-Koppelnachrichten. Mit dem Senden von Steuerungs-Koppelnachrichten von einer bzw. für eine virtuelle Steuerung wird erst ( ggf. wieder) begonnen, wenn das Gerät der virtuellen Steuerung (ggf. wieder) auf Geräteeben gekoppelt ist.

Als besonders vorteilhaft hat sich erwiesen, wenn in Reaktion auf die Kopplung eines Gerätes mit wenigstens einem weiteren Gerät auf Gerätebene mit dem Versand von Steuerungs-Koppelnachrichten von der oder für die wenigstens eine virtuelle Steuerung des Gerätes, insbesondere automatisch, begonnen wird.

Bevorzugter Weise wird der Versand von Steuerungs-Koppelnachrichten von den bzw. für die virtuellen PLCs eines Gerätes mit der bzw. durch die erfolgreiche Kopplung des Gerätes auf Geräteebene insbesondere automatisch veranlasst bzw. begonnen. Als besonders vorteilhaft hat sich erweisen, wenn die Geräte-Kopplungs-Applikation eines Gerätes, nachdem eine erfolgreiche Kopplung mit wenigstens einem weiteren Gerät auf Geräteeben erzielt wurde, die auf dem Gerät installierten virtuellen Steuerungen, insbesondere Steuerungs-Koppel-Applikationen dieser, kontaktiert, und daraufhin automatisch mit dem Versand der Steuerungs-Koppelnachrichten von den bzw. für die virtuellen Steuerungen des Gerätes begonnen wird.

Eine noch nicht gekoppelte virtuelle Steuerung kann sich entsprechend insbesondere dann mit wenigstens einer weiteren auf wenigstens einem weiteren auf Geräteebene gekoppelten Gerät vorgesehene virtuellen Steuerung auf Steuerungsebene koppeln, wenn sie eine von der wenigstens einen weiteren virtuellen Steuerung oder für die wenigstens eine weitere virtuelle Steuerung gesendete Steuerungs-Koppelnachricht empfängt. Die Kopplung auf Steuerungsebene wird in bevorzugter Ausgestaltung durch Versenden einer Steuerungs-Bestätigungsnachricht an die wenigstens eine weitere virtuelle Steuerung, insbesondere von der virtuellen Steuerung, bestätigt.

Die Steuerungs-Koppelnachrichten umfassen in besonders bevorzugter Ausgestaltung Informationen zu der jeweiligen virtuellen Steuerung, insbesondere eine Adresse und/oder einen Identifikator und/oder eine Typenangabe der jeweiligen virtuellen Steuerung. Bei einem Identifikator kann es sich beispielsweise um einen Namen oder eine ID handeln.

Bevorzugt gilt, dass sich eine virtuelle Steuerung nur in demjenigen Fall mit wenigstens einer weiteren auf einem gekoppelten Gerät vorhandenen virtuellen Steuerung auf Steuerungsebene koppelt, dass eine Überprüfung von in der Steuerungs-Koppelnachricht enthaltener Information ergeben hat, dass bestimmte Anforderungen erfüllt sind.

Bevorzugt wird eine Kopplung auf Steuerungsebene nur dann eingegangen, wenn ein Name und/oder eine Adresse der wenigstens einen weiteren virtuellen Steuerung mit einem Namen und/oder einer Adresse der virtuellen Steuerung zumindest teilweise übereinstimmt, insbesondere hinsichtlich einer in dem Namen und/oder der Adresse enthaltenen laufenden Nummer.

Es kann mit anderen Worten beispielsweise sein, dass die Kopplung auf Steuerungsebene nur eingegangen wird, wenn eine in einem Namen oder in einer Adresse aus der Steuerungs-Koppelnachrichten der weiteren virtuellen Steuerung auf dem anderen Gerät eine laufende Nummer aufweist, die mit einer laufenden Nummer aus dem Namen oder der Adresse der virtuellen Steuerung übereinstimmt. Rein beispielhaft sei genannt, dass zwei Geräte, ein Gerät A und ein Gerät B, vorhanden sind, auf denen jeweils drei virtuelle Steuerungen vorhanden, insbesondere installiert sind, die jeweils die laufende Nummer 1, 2 bzw. 3 erhalten, wobei sich diese Ziffern in der jeweiligen Adresse und/oder dem jeweiligen Namen befinden. So können die Adressen und/oder Namen der virtuellen Steuerungen von Gerät A z.B. A.1, A.2 und A.3 lauten und die Adressen und/oder Namen der virtuellen Steuerungen von Gerät B beispielsweise B.1, B.2 und B.3. In diesem Falle würde die virtuelle Steuerung A.1 nur eine Kopplung mit der virtuellen Steuerung B.1 eingehen und nur dieser eine Steuerungs-Bestätigung senden, Steuerungs-Koppelnachrichten von den virtuellen Steuerungen B.2 und B.3 würden von der virtuellen Steuerung A.1 hingegen, aufgrund der abweichenden laufenden Nummer in dem Namen und/oder der Adresse, ignoriert. Entsprechendes würde für die virtuellen Steuerungen A.2 und A.3 gelten, so dass im Ergebnis die Paare A.1 und B.1, A.2 und B.2 sowie A.3 und B.3 erhalten würden (nicht jedoch etwa A.1 und B.2) und somit eine 1:1-Koppelbeziehungen auf Steuerungsebene.

In Weiterbildung des erfindungsgemäßen Verfahrens kann entsprechend vorgesehen sein, dass den virtuellen Steuerungen Namen und/oder Adressen zugewiesen werden, wobei die Namen und/oder Adressen Nummern umfassen oder dadurch gegeben sind, wobei die virtuellen Steuerungen, die auf den Geräten jeweils zuerst installiert werden bzw. wurden bei allen Geräten die gleiche Nummer zugewiesen bekommen, bevorzugt die Nummer 1 und nachfolgend installierte virtuelle Steuerungen weiter hochgezählt werden.

Um immer ein eindeutiges Pairing zu erreichen, kann bei der Nummerierung der virtuellen Steuerungen auf einem (Edge-)Gerät ferner folgendermaßen vorgegangen werden. Wird eine neue virtuelle Steuerung auf dem (Edge-)Gerät installiert, bekommt sie die kleinste nächste freie Nummer bzw. Adresse. Wird eine virtuelle Steuerung deinstalliert, so bleibt ihre Nummer (Adresse) zunächst frei, bis wieder eine neue virtuelle Steuerung installiert wird.

Auch kann es sein, dass eine Kopplung nur dann eingegangen wird, wenn die weitere virtuelle Steuerung vom selben Typ ist wie die virtuelle Steuerung oder zumindest von einem zu dieser kompatiblen Typ. Dann umfassen die Informationen in den Steuerungs-Koppelnachrichten zweckmäßiger Weise Typangaben. Mit anderen Worten können für den Fall, dass auf einem Gerät Redundanz-fähige Steuerungs-, insbesondere PLC-Instanzen unterschiedlichen Typs installiert sind, optional beim Pairing auf der zweiten Stufe Typ-Information berücksichtigt werden. Die vorstehend beschriebene Nummerierung (A.1, A.2, A.2, B.1, B.2, B.3) der virtuellen Steuerungen kann dann z.B. Typ-granular erfolgen. Etwa können die Namen bzw. Adressen zusätzlich noch mindestens einen Buchstaben oder mindestens eine Zahl umfassen, welche den Typ angibt.

Ist auf den Geräten jeweils eine Geräte-Kopplungs-Applikation installiert, kann ferner vorgesehen sein, dass die Geräte-Kopplungs-Applikation für wenigstens eine auf dem jeweiligen Gerät vorgesehene virtuelle Steuerung Steuerungs-Koppelnachrichten versendet und/oder empfängt. Die Geräte-Kopplungs-Applikation kann dann mit anderen Worten nicht nur die Kopplung auf Geräte-Ebene abwickeln, sondern zusätzlich an der Kopplung auf Steuerungsebene zumindest mitwirken.

Beispielsweise kann für die Kopplung auf Steuerungsebene eine auf einem Gerät vorgesehene virtuelle Steuerung die Geräte-Kopplungs-Applikation ihres Gerätes kontaktieren, um mit Hilfe dieser wenigstens eine Steuerungs-Koppelnachricht zu senden.

Die Geräte-Kopplungs-Applikation dieses Gerätes kontaktiert dann bevorzugter Weise die Geräte-Kopplungs-Applikation wenigstens eines weiteren Gerätes, das mit dem Gerät auf Geräteebene gekoppelt ist. In einem 1:1-Kopplungsszenario auf Geräteebene würde das genau eine mit dem Gerät gekoppelte weitere Gerät bzw. dessen Geräte-Kopplungs-Applikation kontaktiert.

Bevorzugt leitet die Geräte-Kopplungs-Applikation des Gerätes die wenigstens eine Steuerungs-Koppelnachricht an die Geräte-Kopplungs-Applikation des wenigstens einen weiteren Gerätes weiter. Diese kann die wenigstens eine Steuerungs-Koppelnachricht dann ihrerseits an wenigstens eine auf ihrem Gerät vorgesehene virtuelle Steuerung weiterleiten. Als ganz besonders vorteilhaft hat sich erweisen, wenn die Geräte-Kopplungs-Applikation die an sie weitergeleitete wenigstens eine Steuerungs-Koppelnachricht als Broadcast-Nachricht innerhalb eines auf ihrem Gerät eingerichteten lokalen virtuellen Netzwerkes an mehrere auf ihrem Gerät vorgesehene virtuelle Steuerungen verteilt.

Bei dieser Variante werden mit anderen Worten sogenannte VLANs (virtuelle LANs) innerhalb der Geräte genutzt, um die Steuerungs-Koppelnachrichten insbesondere an mehrere auf dem jeweiligen Gerät vorgesehene virtuelle Steuerungen verteilt. Ein lokales VLAN erlaubt es der Geräte-Kopplungs-Applikation des jeweiligen Gerätes insbesondere, Multicast-Telegramme zu versenden, welche von einem virtuellen Switch des Gerätes nur an die virtuellen Steuerungen weitergereicht werden.

Der Vorteil dieser Variante besteht darin, dass Steuerungs-Koppelnachrichten insbesondere in Form von Broadcast-Telegrammen nicht im gesamten LAN verteilt werden, sondern nur in dem lokalen VLAN auf einem (Edge-)Gerät wirksam sind.

In diesem Fall kann der Ablauf für die Kopplung auf Steuerungsebene beispielsweise wie folgt sein.

Eine virtuelle Steuerung kontaktiert die Geräte-Kopplungs-Applikation ihres Gerätes, wenn sie eine Steuerungs-Koppelnachricht insbesondere als Broadcast-Nachricht bzw. - Telegramm versenden möchte.

Die lokale Geräte-Kopplungs-Applikation kontaktiert daraufhin die Geräte-Kopplungs-Applikation auf dem in der ersten Stufe gepairten (Edge-)Gerät. Die Geräte-Kopplungs-Applikation auf dem gekoppelten Gerät wandelt diese Anfrage bevorzugt in ein Broadcast-Telegramm innerhalb des lokalen VLANs auf dem gekoppelten Gerät um. Empfängt nun eine noch nicht gekoppelte virtuelle Steuerung in dem VLAN diese Steuerungs-Koppelnachricht in Form eines Broadcast-Telegramms, so verhält sie sich bevorzugt folgendermaßen. Die virtuelle Steuerung prüft zunächst, ob das Gerät auf dem sie installiert ist, bereits gekoppelt ist. Dazu kontaktiert sie Geräte-Kopplungs-Applikation. Ist das Gerät nicht gekoppelt, ignoriert die virtuelle Steuerung die Steuerungs-Koppelnachricht. Ist das Gerät hingegen bereits gekoppelt (Stufe 1, Geräteebene) und ist die virtuelle Steuerung selbst noch nicht gekoppelt (auf Stufe 2, Steuerungsebene), so prüft sie bevorzugt eine in dieser Steuerungs-Koppelnachricht enthaltene Adresse. Insbesondere für den Fall, dass eine in der Adresse enthaltene laufende Nummer mit der eigenen laufenden Nummer, also der laufenden Nummer der virtuellen Steuerung, übereinstimmt, geht die virtuelle Steuerung eine Kopplung auf Steuerungsebene mit der weiteren virtuellen Steuerung, von der bzw. für die die Steuerungs-Koppelnachricht gesendet wurde, ein. In dem vorstehend bereits genannten Beispiel mit den Adressen A.1, A.2, A.3, B.1, B.2, B.3 von virtuellen Steuerungen auf den Geräten A bzw. B, pairen sich A. 1 und B.1 oder A.3 und B.3, nicht jedoch A. 1 und B.2. Die virtuellen Steuerungen bestätigen vorteilhafter Weise jeweils das Pairing, indem sie mittels der Geräte-Kopplungs-Applikation auf ihrem lokalen Gerät die Antwort, insbesondere Steuerungs-Bestätigungsnachricht, zur virtuellen Steuerung auf dem anderen, remoten Gerät übertragen.

In beiden Varianten - mit oder ohne Nutzung lokaler VLANS- kann rein optional vorgesehen sein, dass von einer oder für eine virtuelle Steuerung nach Empfang einer Steuerungs-Koppelnachricht (zunächst) der aktuelle Kopplungszustand ihres Gerätes, insbesondere automatisch, überprüft wird. Nur in demjenigen Falle, dass die Überprüfung ergibt, dass ihr Gerät auf Geräteebene mit dem wenigstens einen weiteren Gerät der wenigstens einen weiteren virtuellen Steuerung gekoppelt ist, geht die virtuelle Steuerung dann eine Kopplung auf Steuerungsebene mit der wenigstens einen weiteren virtuellen Steuerung ein. Andernfalls ignoriert sie die empfangene Steuerungs-Koppelnachricht. Wenn auf dem Gerät eine Geräte-Kopplungs-Applikation vorhanden ist, kann für die virtuelle Steuerung bzw. von der virtuellen Steuerung der Kopplungszustand des Geräts geprüft werden, indem die auf dem Gerät installierte Geräte-Kopplungs-Applikation kontaktiert wird, beispielsweise von einer Steuerungs-Kopplungs-Applikation der virtuellen Steuerung. Der aktuelle Kopplungszustand kann bei der Geräte-Kopplungs-Applikation abgefragt werden.

In ganz besonders vorteilhafter Weiterbildung gilt, dass die virtuellen Steuerungen jeweils eine Steuerungs-Kopplungs-Applikation umfassen, welche die Kopplung auf Steuerungsebene zumindest teilweise abwickelt. In diesem Falle können die Steuerungs-Kopplungs-Applikationen beispielsweise jeweils mit einer Geräte-Kopplungs-Applikation des betreffenden Gerätes kommunizieren, von diesem z.B. den Kopplungszustand auf Geräteebene abfragen, wie vorstehend beschrieben, bzw. Steuerungs-Koppelnachrichten versenden oder den Versand veranlassen.

Für den Fall, dass wenigstens zwei auf Geräteebene gekoppelte Geräte ihr Kopplung verlieren, gilt zweckmäßiger Weise, dass auch die auf den Geräten vorgesehenen virtuelle Steuerungen etwaig bestehende Kopplungen auf Steuerungsebene verlieren.

Es kann ferner vorgesehen sein, dass für den Fall, dass wenigstens zwei auf Steuerungsebene miteinander gekoppelte virtuelle Steuerungen ihre Kopplung verlieren, sie den Versand von Steuerungs-Koppelnachrichten, insbesondere automatisch, wieder aufnehmen. Bevorzugt erfolgt dabei die (automatische) Wiederaufnahme des Versandes von Steuerungs-Koppelnachrichten erst bzw. nur dann, wenn das Gerät, auf dem die jeweilige virtuelle Steuerung vorgesehen, insbesondere installiert ist, mit wenigstens einem weiteren Gerät auf Geräteebene gekoppelt ist. Es kann vorgesehen sein, dass für den Fall, dass eine virtuelle Steuerung eine bestehende Koppelung auf Steuerungsebene verliert, von dieser bzw. für diese zunächst der Koppelungszustand ihres Gerätes geprüft wird und erst im Anschluss, wenn eine solche Überprüfung ergeben hat, dass ihr Gerät auf Geräteebene gekoppelt ist, (automatisch) wieder mit dem Versand von Steuerungs-Koppelnachrichten von oder für die virtuelle Steuerung begonnen wird. Ist eine Geräte-Kopplungs-Applikation auf dem Gerät vorhanden, kann diese zur Überprüfung des Geräte-Kopplungszustandes kontaktiert werden, z.B. von einer Steuerungs-Kopplungs-Applikation der virtuellen Steuerung, wie vorstehend beschrieben.

Ein weiterer Gegenstand der vorliegenden Erfindung ist ein Computerprogramm, das Programmcodemittel umfasst, die, wenn sie auf wenigstens einem Computer, insbesondere Edge-Gerät, ausgeführt werden, den wenigstens einen Computer, insbesondere das wenigstens eine Edge-Gerät, veranlassen, die Schritte des erfindungsgemäßen Verfahrens durchzuführen. Das Computerprogramm kann auf wenigstens einem beliebigen Rechner laufen und/oder unter Nutzung einer Cloud.

Das erfindungsgemäße Computerprogramm kann auf einem Gerät, wie einem Edge-Gerät gespeichert sein bzw. werden. Entsprechend ist Gegenstand der Erfindung auch ein Gerät, insbesondere Edge-Gerät, umfassend wenigstens einen Prozessor und wenigstens einen Speicher, auf dem ein erfindungsgemäßes Computerprogramm abgelegt ist.

Das erfindungsgemäße Computerprogramm kann beispielsweise auch mehrere Programmkomponenten umfassen. Eine Komponente kann beispielsweise durch eine Geräte-Kopplungs-Applikation des oder des jeweiligen (Edge-)Gerätes gegeben sein und wenigstens eine weitere Programmkomponente durch wenigstens eine Steuerungs-Kopplungs-Applikation für bzw. von wenigstens einer auf dem jeweiligen (Edge-)Gerät implementierten virtuellen Steuerung, etwa PLC.

Die Erfindung betrifft auch ein computerlesbares Medium, das Instruktionen umfasst, die, wenn sie auf wenigstens einem Computer, insbesondere Edge-Gerät, ausgeführt werden, den wenigstens einen Computer, insbesondere das wenigstens eine Edge-Gerät, veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Für die weitere Ausgestaltung der Erfindung wird auf die Unteransprüche und die Beschreibung der nachfolgenden Ausführungsbeispiele unter Bezugnahme auf die Zeichnung verwiesen. In der Zeichnung zeigt:
- Figur 1: ein Edge-Gerät, auf dem drei virtuelle PLCs installiert sind, in rein schematischer Blockdarstellung,
- Figur 2: in rein schematischer Blockdarstellung Ausführungsbeispiele zweier erfindungsgemäßer Edge-Geräte, auf denen jeweils drei virtuelle PLCs installiert sind, wobei die Geräte und deren virtuelle Steuerungen unter Durchführung eines Ausführungsbeispiels des erfindungsgemäßen Verfahren auf Geräte- bzw. Steuerungsebene gekoppelt werden,
- Figur 3: die Edge-Geräte aus Figur 2, wobei zusätzlich die Steuerungs-Kopplungs-Applikationen der virtuellen Steuerungen und das lokale Netzwerk, über welches die Edge-Geräte verbunden sind, gezeigt sind,
- Figur 4: eines der erfindungsgemäßen Edge-Geräte aus den Figuren 2 oder 3 mit lokalem VLAN, und
- Figur 5: ein Zustandsdiagramm für das Pairing auf Geräteebene.

In den Figuren sind gleiche bzw. ähnliche Elemente bzw. Komponenten mit gleichen Bezugszeichen versehen.

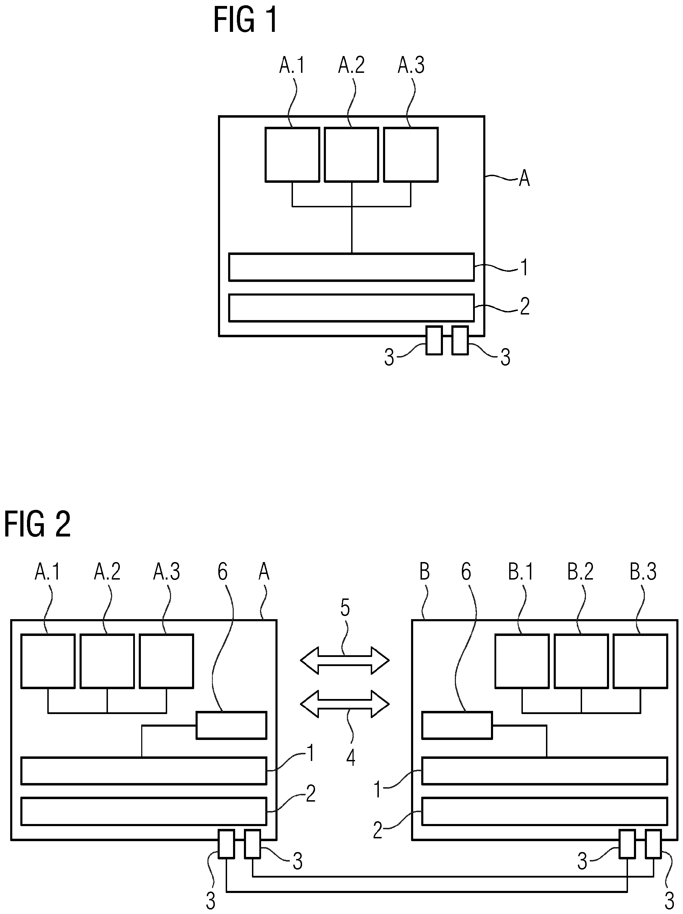

Die Figur 1 zeigt in stark vereinfachter, rein schematischer Block-Darstellung ein Edge-Gerät A, auf dem drei virtuelle Steuerungen A.1, A.2, A.3 vorgesehen, konkret installiert sind. Die virtuellen PLCs A.1, A.2, A.3 dienen der Steuerung bzw. Regelung einer in der Figur nicht weiter dargestellten industriellen Anlage, beispielsweise Fertigungs- bzw. Verfahrensanalage. Die Anzahl von drei virtuellen Steuerungen A.1, A.2, A.3 auf dem Edge-Gerät A ist dabei rein beispielhaft zu verstehen und es können auch mehr oder weniger virtuelle Steuerungen auf diesem vorhanden sein. Bei den virtuellen PLCs A.1, A.2, A.3 kann es sich zum Beispiel jeweils um die "Simatic S7-1500V" von Siemens handeln, wobei dies rein beispielhaft zu verstehen ist und es sich prinzipiell auch um andere virtuelle Steuerungen handeln kann.

Bei dem Edge-Gerät A, das sich beispielsweise in oder nahe der industriellen Anlage befindet, kann es sich zum Beispiel um einen Industriecomputer mit einem oder mehreren Prozessoren, einem oder mehreren Speichern und weiteren üblichen Hardware-Komponenten handeln bzw. das Edge-Gerät A kann als ein solcher ausgebildet sein. Die Hardware-Komponenten sind in der stark vereinfachten, schematischen Figur 1 nicht dargestellt. Neben den virtuellen Steuerungen A.1, A.2, A.3 in der Figur 1 gezeigt sind ein virtueller Switch 1, ein Hypervisor 2 und beispielhaft zwei Schnittstellen 3 des Edge-Gerätes A. Die Figur 1 zeigt eine übliche Umgebung mit mehreren virtualisierter PLCs A.1, A.2, A.3, wie sie nach Erwartung der Anmelderin zukünftig breiten Einsatz finden wird.

Die virtuellen PLCs A.1, A.2, A.3 werden auf dem Edge-Gerät A parallel ausgeführt. Der Hypervisor 2 teilt dabei die Rechenleistung auf die einzelnen virtuellen PLCs A.1, A.2, A.3, die auch als PLC-Instanzen bezeichnet werden können, auf und erlaubt diesen den Zugriff auf die Ressourcen des Edge-Gerätes A, wie z.B. die Kommunikations-Schnittstellen 3, die über den virtuellen Switch 1 an die virtuellen PLCs A.1, A.2, A.3 angebunden sind.

Im Zusammenhang mit dem in Figur 1 dargestellten Szenario besteht folgende Problematik. Fällt das Edge-Gerät A aus, fallen mit ihm auch alle auf dem Edge-Gerät ablaufenden virtuellen PLCs A.1, A.2, A.3 aus. Dies kann zum Stillstand von großen Teilen einer industriellen Anlage führen, in der bzw. für deren Steuerung die virtuellen PLCs A.1, A.2, A.3 genutzt werden. Dies wird für den Anwender bzw. Betreiber der Anlage in der Regel nicht tolerierbar sein.

Die Zuverlässigkeit kann prinzipiell durch (Hardware-)Redundanz erhöht werden. Dies istwiederum vereinfacht und rein schematisch - in Figur 2 dargestellt. Hier ist neben dem Edge-Gerät A noch ein weiteres Edge-Gerät B vorgesehen, das zu dem Edge-Gerät A baugleich ausgebildet sein kann.

In diesem Szenario ist es möglich, dass sich die auf dem einem Edge-Gerät A ablaufende virtuelle PLCs A.1, A.2, A.3 mit einem jeweiligen "Partner" auf dem anderen, dazu redundanten Edge-Gerät B synchronisieren. Wie man in Figur 1 erkennt, sind auf dem Edge-Gerät B auch drei virtuelle Steuerungen, konkret virtuelle PLCs B.1, B.2, B.3 vorgesehen. Damit die Synchronisation überhaupt möglich ist, muss von den bzw. für die virtuellen PLCs A.1, A.2, A.3 des einen Gerätes A aber zunächst ein jeweiliger Partner auf dem anderen, redundanten Edge-Gerät B "gefunden" werden. Man kann auch sagen, es muss zunächst eine geräteübergreifende Kopplung bzw. ein geräteübergreifendes "Pairing" von - in dem dargestellten Beispiel - zwei auf zwei verschiedenen Geräten A, B befindlichen, konkret installierten virtuellen Steuerungen A.1, A.2, A.3, B.1, B.2, B.3 erfolgen. Gekoppelte virtuelle Steuerungen A.1, A.2, A.3, B.1, B.2, B.3 können sich dann geräteübergreifend synchronisieren bzw. synchronisiert werden, um Redundanz zu gewährleisten.

Bei dem Pairing in der virtuellen Umgebung ergeben sich jedoch folgende Probleme:
- virtuelle Steuerungen A.1, A.2, A.3, B.1, B.2, B.3 auf dem gleichen Edge-Gerät Ab, B sollen sich nicht pairen, da in diesem Falle keine Hardware-Redundanz gewährleistet wäre.
- Jeder virtuelle Steuerung A.1, A.2, A.3, B.1, B.2, B.3 stehen mehrere potentielle Redundanzpartner für das Pairing zur Verfügung, es soll jedoch sichergestellt werden, dass stets eindeutige Paare (oder Gruppen) gebildet werden und für den Fall, dass 1:1-Redundnazbeziehungen gewünscht sind, keine virtuelle Steuerung mehrere Redundanzpartner erhält.

Das im Folgenden beschriebene Ausführungsbeispiel des erfindungsgemäßen Verfahrens bietet hierfür eine Lösung.

Dabei wird eine zweistufige Kopplung durchgeführt, die eine Kopplung auf Geräteebene und eine anschließende Kopplung auf Steuerungsebene umfasst. In der schematischen Figur 2 ist die Kopplung auf Geräteebene durch einen mit dem Bezugszeichen 4 versehenen Pfeil dargestellt und die Kopplung auf Steuerungsebene durch einen Pfeil 5.

Im Rahmen der Kopplung 4 auf der Geräteebene wird das Edge-Gerät A, auf dem die drei virtuellen PLCs A.1, A.2, A.3 vorgesehen, konkret installiert sind, zunächst mit dem weiteren Edge-Gerät B, auf dem in dem dargestellten Beispiel ebenfalls drei virtuelle PLCs B.1, B.2, B.3 vorgesehen, nämlich installiert sind, gekoppelt.

Dieses Pairing auf Edge-Geräteebene wird dabei von einer Geräte-Kopplungs-Applikation 6, die auch als Geräte-Pairing-App bezeichnet werden kann, durchgeführt. Die Geräte-Kopplungs-Applikation 6 ist auf jedem der beiden Edge-Geräte A, B genau einmal vorhanden, konkret installiert (vgl. Figur 2).

Die Geräte-Kopplungs-Applikation 6 nutzt für die Kopplung Schnittstellen 3 des (jeweiligen) Edge-Gerätes A, B. Es kann sich um zu diesem Zweck vorgesehene Schnittstellen 3 handeln, die auch als Redundanz-Schnittstellen bezeichnet werden können. Über diese Schnittstellen 3 ist das Redundanz-fähige Edge-Gerät A mit dem weiteren Redundanz-fähigen Edge-Gerät B verbunden. Ein Pairing kommt dann zustande, wenn sich - hier - genau zwei Redundanz-fähige Edge-Geräte A, B über ihre Redundanz-Schnittstellen 2 Kommunikations-technisch erreichen können.

Vorliegend werden für die Kopplung 4 auf der Geräteebene von den Geräten A, B Geräte-Koppelnachrichten über die Redundanz-Schnittstellen 3, über welche sie verbunden sind, gesendet. Dies gilt zweckmäßiger Weise nur für solche Edge-Geräte A, B, die nicht (noch nicht bzw. nicht mehr) auf Geräteebene mit einem anderen Gerät A, B gekoppelt sind.

Ein Gerät A, B koppelt sich mit einem weiteren Gerät A, B, wenn es eine von dem oder für das weitere Gerät A, B gesendete Geräte-Koppelnachricht empfängt und nicht auf Geräteebene gekoppelt ist. Die Kopplung 4 auf Gerätebene wird dann zweckmäßiger Weise durch Versenden einer Geräte-Bestätigungsnachricht an das weitere Gerät, vorliegend durch das Gerät A, B, nämlich dessen Geräte-Kopplungs-Applikation 6, bestätigt. Bei den Geräte-Koppelnachrichten kann es sich um Broadcast-Nachrichten bzw. -Telegramme handeln.

Es ist möglich, dass die Geräte-Koppelnachrichten Informationen zu dem jeweiligen Gerät A, B, etwa eine Adresse und/oder einen Identifikator und/oder eine Typenangabe des jeweiligen Gerätes A, B, umfassen. Auch kann vorgesehen sein, dass sich ein Gerät A, B nur in demjenigen Fall mit wenigstens einem weiteren Gerät A, B auf Geräteebene koppelt, dass eine Überprüfung von in der Geräte-Koppelnachricht enthaltener Information ergeben hat, dass bestimmte Anforderungen von dem wenigstens einen weiteren Gerät A, B erfüllt werden, es zum Beispiel ein Gerät des gleichen oder eines kompatiblen Typen ist.

Sofern nur 1:1-Kopplungsbeziehungen auf Geräteebene gewünscht sind, kann folgendes vorgesehen sein. Sieht ein Redundanz-fähiges Edge-Gerät A, B nicht nur eines, sondern mehrere andere Redundanz-fähige Edge-Geräte A, B, ggf. des gleichen Typs (in Figur 2 nicht dargestellt), so geht es in einen Kopplungsfehlerzustand über, in dem es keine Kopplung auf Geräteebene eingeht. Der Kopplungsfehlerzustand des bzw. des jeweiligen Gerätes A, B kann insbesondere automatisch wieder aufgehoben werden, wenn das (jeweilige) Gerät A, B nur noch Geräte-Koppelnachrichten von genau einem weiteren oder für genau ein weiteres Gerät A, B empfängt. Werden z.B. von einem Benutzer drei oder mehr Geräte-Koppelnachrichten versendende Geräte A, B an ein lokales Netzwerk angeschlossen bzw. in einem lokalen Netzwerk betrieben, gehen die Geräte A, B in den Kopplungsfehlerzustand und dieser wird erst - bevorzugt automatisch - beendet, wenn alle bis auf genau zwei Geräte A, B entfernt wurden bzw. diese keine Geräte-Koppelnachrichten versenden.

Alternativ kann ein Pairing-Fehlerzustand auch erst dann vorgesehen sein, wenn ein Redundanz-fähiges Edge-Gerät A, B N (N>2) andere Redundanz-fähige Edge-Geräte A, B, ggf. des gleichen Typs, "findet". Jedes Redundanz-fähige Edge-Gerät A, B kann dann in der Lage sein, sich mit N-1, also zwei oder mehr, Geräte-Redundanzpartnern zu pairen. Der in praktischen Anwendungen am häufigsten vorkommende Fall ist jedoch das 1-zu-1 Pairing von genau zwei Redundanz-fähigen Edge-Geräten A, B, der in Figur 2 dargestellt ist.

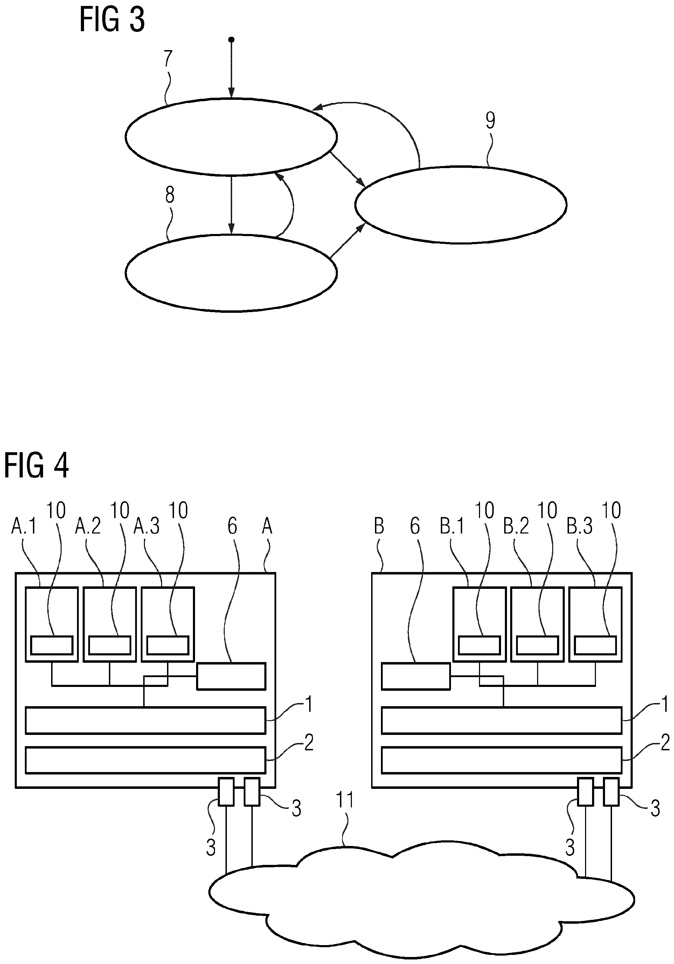

Die Figur 3 zeigt ein Zustandsdiagramm für die Kopplung 4, mit anderen Worten das Pairing, auf der Geräteebene. Erkennbar sind der mit dem Bezugszeichen 7 versehen Zustand "Ungekoppelt", der mit dem Bezugszeichen 8 versehene Zustand "Gekoppelt" und der mit dem Bezugszeichen 9 versehene "Koppelfehlerzustand". Pfeile deuten an, welche Übergänge zwischen den Zuständen möglich sind.

Auf Basis der Kopplung 4 auf Gerätebene, mit anderen Worten auf der ersten Stufe, kann die Kopplung 5 auf Steuerungsebene erfolgen.

Neben der Geräte-Kopplungs-Applikation 6, die für die Kopplung 4 auf Stufe 1 zuständig ist, gibt es auch in den virtuellen Steuerungen A.1, A.2, A.3, B.1, B.2, B.3 eine Pairing-Komponente, konkret eine Software-Komponenten, die als Steuerungs-Kopplungs-Applikation 10. Dass die virtuellen Steuerungen A.1, A.2, A.3, B.1, B.2, B.3jeweils eine Steuerungs-Kopplungs-Applikation 10 umfassen, ist in Figur 4 - beispielhaft für das Edge-Gerät A - dargestellt.

Die Steuerungs-Kopplungs-Applikationen 10 sind für die im Folgenden beschriebene Kopplung 5 auf der Steuerungsebene, man kann auch sagen Applikations-Ebene (Stufe 2), zuständig und wickeln diese - zusammen mit den Geräte-Kopplungs-Applikationen 6 der Edge-Geräte A, B, ab.

Für die Kopplung auf Steuerungsebene werden im Folgenden zwei Möglichkeiten beschrieben.

Die Kopplung 5 auf Steuerungsebene (Stufe 2) erfolgt dadurch, dass jede noch nicht gepairte virtuelle PLC A.1, A.2, A.3, B.1, B.2, B.3, wenigstens eine Steuerungs-Koppelnachricht sendet, bei der es sich um ein Broadcast-Telegramm handeln kann. Zweckmäßiger Weise senden dabei nur diejenigen virtuellen PLCs A.1, A.2, A.3, B.1, B.2, B.3 wenigstens eine Steuerungs-Koppelnachricht, deren Edge-Gerät A, B bereits auf Geräteebene gekoppelt ist. Bevorzugter Weise wird der Versand von Steuerungs-Koppelnachrichten von den bzw. für die virtuellen PLCs A.1, A.2, A.3, B.1, B.2 eines Gerätes A, B mit der bzw. durch die erfolgreiche Kopplung des Gerätes A, B auf Geräteebene insbesondere automatisch veranlasst bzw. begonnen. Hierfür kontaktiert bevorzugt die Geräte-Kopplungs-Applikation 6 eines Gerätes A, B, nachdem eine erfolgreiche Kopplung mit einem weiteren Gerät A, B auf Geräteeben erzielt wurden, die auf ihm installierten virtuellen PLCs A.1, A.2, A.3, B.1, B.3, insbesondere deren Steuerungs-Koppel-Applikationen 10 und die Steuerungs-Koppel-Applikationen 10 beginnen mit dem Versand der Steuerungs-Koppelnachrichten. Die wenigstens eine Steuerungs-Koppelnachricht der jeweiligen virtuellen PLC A.1, A.2, A.3, B.1, B.2, B.3 gelangt über den virtuellen Switch 1 zu allen Teilnehmern im Netzwerk, insbesondere LAN 11. Es sei angemerkt dass in Figur 4 die Verbindung der beiden Geräte A, B über eine ein LAN 11 repräsentierende Wolke dargestellt ist und nicht über Netzwerkleitungen, wie in der schematischen Figur 2.

Bevorzugt gilt, dass jede virtuelle PLC A.1, A.2, A.3, B.1, B.2, B.3 in ihrer Steuerungs-Koppelnachricht bzw. ihren Steuerungs-Koppelnachrichten Informationen über sich mitsendet, bevorzugt zumindest ihre eigene Adresse. Die Adresse kann beispielsweise den Bezugszeichen entsprechen, die in den Figuren jeweils für die virtuelle PLC A.1, A.2, A.3, B.1, B.2, B.3 gewählt sind. Beispielsweise kann eine Steuerungs-Koppelnachricht der virtuellen PLC A.1 die Angabe "A.1" als Adressangabe aufweisen, die virtuelle PLC B.1 als Adressangabe "B.1" und so weiter.

Empfängt eine noch nicht gekoppelte virtuelle PLC A.1, A.2, A.3, B.1, B.2, B.3 eine Steuerungs-Koppelnachrichten, von einer oder für eine andere virtuelle PLC A.1, A.2, A.3, B.1, B.2, B.3, so verhält sie sich beispielsweise folgendermaßen.

Die noch nicht gekoppelte virtuelle PLC A.1, A.2, A.3, B.1, B.2, B.3 , konkret deren Steuerungs-Kopplungs-Applikation 10, prüft die in der empfangenen Steuerungs-Koppelnachricht enthaltene Adresse. Stimmt die laufende Nummer aus der gesendeten Adresse mit der laufenden Nummer der eigenen Adresse der empfangenden virtuellen PLC A.1, A.2, A.3, B.1, B.2, B.3 überein, so geht die virtuelle PLC A.1, A.2, A.3, B.1, B.2, B.3 ein Pairing mit derjenigen virtuellen PLC A.1, A.2, A.3, B.1, B.2, B.3 ein, von welcher bzw. für welche diese Steuerungs-Koppelnachricht gesendet wurde. Die virtuelle PLC A.1, A.2, A.3, B.1, B.2, B.3 bestätigt die Kopplung auf Steuerungsebene ferner, insbesondere mittels eines Telegramms (Steuerungs-Bestätigungsnachricht) zum Sender der ursprünglichen Pairing-Anfrage.

Auf diese Weise koppeln/pairen sich beispielsweise A.1 und B.1 oder A.3 und B.3, nicht jedoch A.1 und B.2. Die Erzielung eindeutiger Paare wird gewährleistet.

Es sei angemerkt, dass es optional möglich ist, dass eine noch nicht gekoppelte virtuelle PLC A.1, A.2, A.3, B.1, B.2, B.3, die eine Steuerungs-Koppelnachrichten empfängt, zusätzlich prüft, ob das Edge-Gerät A, B auf dem sie installiert ist, auf Geräteeben bereits gekoppelt ist. Diese zusätzliche Prüfung kann zuerst, also noch vor der Prüfung beispielswiese einer enthaltenen Adresse erfolgen. Ist die Prüfung des Kopplungszustandes des eigenen Gerätes A, B vorgesehen, kann die jeweilige virtuelle PLC A.1, A.2, A.3, B.1, B.2, B.3 dazu die Geräte-Kopplungs-Applikation 6 ihres Edge-Gerätes A, B kontaktieren. Ist ihr Edge-Gerät A, B nicht gekoppelt, ignoriert die jeweilige virtuelle PLC A.1, A.2, A.3, B.1, B.2, B.3 die empfangene Steuerungs-Koppelnachricht, prüft also nicht deren Adresse. Mit anderen Worten kann - rein optional - von der virtuellen PLC A.1, A.2, A.3, B.1, B.2, B.3 der Kopplungszustand ihres Gerätes A, B verifiziert werden, bevor sie eine Kopplung auf Steuerungsebene eingeht.

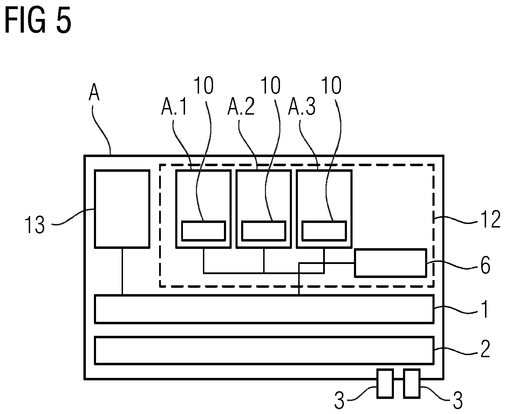

Es ist auch möglich, virtuelle Netzwerke innerhalb der Edge-Geräte A, B zu nutzen. Dies ist am Beispiel von Edge-Gerät A rein schematisch in Figur 5 dargestellt. Hier ist ein lokales VLAN 12 erkennbar, in welchem sich alle auf diesem Gerät A installierten virtuellen Steuerungen A.1, A.2, A.3 und die Geräte-Kopplungs-Applikation 6 dieses Edge-Gerätes A befinden. Auf dem weiteren Edge-Gerät B kann in völlig analoger Weise ein lokales VLAN 12 eigerichtet sein, bzw. ist eingerichtet, in welchem sich alle auf dem Edge-Gerät B installierten virtuellen Steuerungen B.1, B.2, B.3 und die Geräte-Kopplungs-Applikation 6 von Edge-Gerät B befinden, was nur aus Gründen der Übersichtlichkeit nicht zusätzlich dargestellt ist. Das jeweilige lokale VLAN 12 kann beispielsweise eingerichtet werden bzw. eingerichtet worden sein, wenn die erste virtuelle PLC A.1, A.2, A.3, B.1, B.2, B.3 auf dem jeweiligen Gerät A; B installiert wird bzw. wurde.

Das lokale VLAN 12 erlaubt es der Geräte-Kopplungs-Applikation 6 des Edge-Gerätes A,B Multicast-Telegramme zu versenden, welche vom virtuellen Switch 1 nur an die virtuellen PLCs A.1, A.2, A.3, B.1, B.2, B.3 weitergereicht werden. Damit kann das Pairing auf Stufe 2 nun folgendermaßen ablaufen.

Eine virtuelle PLC A.1, A.2, A.3, B.1, B.2, B.3, insbesondere deren Steuerungs-Kopplungs-Applikation 10 kontaktiert die Geräte-Kopplungs-Applikation 6 ihres Edge-Gerätes A, B, wenn sie eine Steuerungs-Koppelnachricht, insbesondere in Form eines Broadcast-Telegrammes, versenden möchte. Die lokale Geräte-Kopplungs-Applikation 6 dieses Gerätes A, B kontaktiert daraufhin die Geräte-Kopplungs-Applikation 6 desjenigen Edge-Gerätes A, B, mit dem zuvor eine Kopplung auf Geräteebene eingegangen wurde (Stufe 1).

Die Geräte-Kopplungs-Applikation 6 dieses anderen, auf Geräteebene mit dem Geräte A,B gekoppelten Gerätes A, B wandelt diese Anfrage bevorzugt in ein Broadcast-Telegramm innerhalb des lokalen VLANs 12 auf dem gekoppelten Edge-Gerät A, B um. Empfängt nun eine auf Steuerungsebene noch nicht gekoppelte virtuelle PLC A.1, A.2, A.3, B.1, B.2, B.3 dieses Broadcast-Telegramm, so verhält sie sich zweckmäßiger Weise wieder, wie vorstehend bereits beschrieben.

Das bedeutet, die virtuelle PLC A.1, A.2, A.3, B.1, B.2, B.3, konkret deren Steuerungs-Kopplungs-Applikation 10, prüft die in der empfangenen Steuerungs-Koppelnachricht enthaltene Adresse. Stimmt die laufende Nummer aus der gesendeten Adresse mit der laufenden Nummer der eigenen Adresse der empfangenden virtuellen PLC A.1, A.2, A.3, B.1, B.2, B.3 überein, so geht die virtuelle PLC A.1, A.2, A.3, B.1, B.2, B.3 ein Pairing mit virtuellen PLC A.1, A.2, A.3, B.1, B.2, B.3 ein, von welcher bzw. für welche diese Steuerungs-Koppelnachricht gesendet wurde. Die virtuelle PLC Steuerungs-Koppelnachricht bestätigt die Kopplung auf Steuerungsebene ferner, insbesondere mittels eines Telegramms (Steuerungs-Bestätigungsnachricht) zum Sender der ursprünglichen Pairing-Anfrage.

Der Vorteil der Nutzung von lokalen VLANS 12 auf den Geräten A, B besteht darin, dass die Steuerungs-Koppelnachrichten in Form von Broadcast-Telegrammen, die auf Stufe 2 gesendet werden, nicht im gesamten LAN 11 verteilt werden, sondern nur in dem lokalen VLAN 12 auf einem Edge-Gerät A, B wirksam sind.

Auch bei der Nutzung lokaler VLANs 12 gilt, dass es optional möglich ist, dass eine noch nicht gekoppelte virtuelle PLC A.1, A.2, A.3, B.1, B.2, B.3 , die eine Steuerungs-Koppelnachrichten empfängt, zunächst prüft, ob das Edge-Gerät A, B auf dem sie installiert ist, auf Geräteeben bereits gekoppelt ist, wobei sie hierzu die Geräte-Kopplungs-Applikation 6 ihres Edge-Gerätes A, B kontaktieren kann. Ist ihr Edge-Gerät A, B nicht gekoppelt, ignoriert die virtuelle PLC A.1, A.2, A.3, B.1, B.2, B.3 die empfangene Steuerungs-Koppelnachricht, prüft also nicht deren Adresse.

Es sei angemerkt, dass Edge-Geräte A, B neben den vorstehend im Zusammenhang mit der Kopplung beschriebenen Applikationen 6, 10 natürlich noch weitere Applikationen aufweisen können. Dies ist in Figur 5 zusätzlich angedeutet, in welcher neben dem lokalen VLAN 12 noch ein Blockelement 13 gezeigt ist, welches andere Edge-Gerät-Applikationen repräsentiert. In den Figuren 1, 2 und 4 sind die ggf. vorhandenen weiteren Applikationen 13 des Edge-Gerätes A, B nicht zusätzlich eingezeichnet.

Zweckmäßiger Weise gilt, dass für den Fall, dass zwei gepairte virtuelle PLCs A.1, A.2, A.3, B.1, B.2, B.3 ihr Pairing auf Steuerungsebene verlieren, sie beide automatisch wieder von Neuem mit dem Versenden der Steuerungs-Koppelnachrichten, insbesondere in Form von Broadcast-Telegrammen, beginnen. Verliert das gesamte Edge-Gerät A, B die Kopplung auf Geräteebene (Stufe 1), so verlieren zweckmäßiger Weise alle virtuellen PLCs A.1, A.2, A.3, B.1, B.2, B.3 auf diesem Edge-Gerät A, B ebenfalls ihre Kopplung auf Steuerungsebene (Stufe 2).

Die Geräte-Kopplungs-Applikation 6 eines Gerätes A,B und die auf einem Gerät A, B installierten Steuerungs-Kopplungs-Applikationen 10 können Programmkomponenten eines Ausführungsbeispiels des erfindungsgemäßen Computerprogramms bilden, das auf einem Edge-Gerät A, B installiert sein bzw. werden kann.

Um eine eindeutige Kopplung 5 zwischen jeweils zwei virtuellen PLCs A.1, A.2, A.3, B.1, B.2, B.3 auf Steuerungsebene zu erzielen, wird bei der Nummerierung der virtuellen PLCs A.1, A.2, A.3, B.1, B.2, B.3 auf einem Edge-Gerät A, B bzw. bei der Nummerierung von deren Adressen zweckmäßiger Weise folgendermaßen vorgegangen. Wird eine neue virtuelle PLC A.1, A.2, A.3, B.1, B.2, B.3 auf dem Edge-Gerät A, B installiert, bekommt sie die kleinste nächste freie Nummer bzw. Adresse. Wird eine virtuelle PLC A.1, A.2, A.3, B.1, B.2, B.3 deinstalliert so bleibt ihre Nummer (Adresse) zunächst frei, bis wieder eine neue virtuelle PLC installiert wird, die dann diese Nummer bzw. Adresse erhalten kann.

Wie vorstehend bereits angemerkt, ist es natürlich möglich, dass auf einem Edge-Gerät A, B Redundanz-fähige virtuelle PLCs A.1, A.2, A.3, B.1, B.2, B.3 unterschiedlichen Typs installiert sind bzw. werden. In diesem Fall kann optional beim Koppeln 5 auf der Steuerungsebene (Stufe 2) die Typ-Information berücksichtigt werden, wie vorstehend ebenfalls angemerkt. Eine Kopplung 5 auf Steuerungsebene könnte z.B. nur dann gewünscht sein, wenn es sich um virtuelle PLCs des gleichen Typs handelt. Die beschriebene Nummerierung der virtuellen PLCs kann dann Typ-granular erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur Kopplung von wenigstens zwei, bevorzugt genau zwei, auf verschiedenen Geräten, insbesondere Edge-Geräten (A, B), vorgesehenen virtuellen Steuerungen (A.1, A.2, A.3, B.1, B.2, B.3), insbesondere virtuellen PLCs, für einen Redundanzbetrieb, bei dem eine zweistufige Kopplung umfassend eine Kopplung (4) auf Geräteebene und eine anschließende Kopplung (5) auf Steuerungsebene durchgeführt wird, wobei im Rahmen der Kopplung (4) auf der Geräteebene ein Gerät (A, B), auf dem wenigstens eine virtuelle Steuerung (A.1, A.2, A.3, B.1, B.2, B.3) vorgesehen ist und/oder wird, mit wenigstens einem weiteren Gerät (A, B), auf dem wenigstens eine weitere virtuelle Steuerung (A.1, A.2, A.3, B.1, B.2, B.3) vorgesehen ist und/oder wird, gekoppelt wird, und im Rahmen der Kopplung (5) auf der Steuerungsebene eine virtuelle Steuerung (A.1, A.2, A.3, B.1, B.2, B.3), die auf einem der auf Geräteebene gekoppelten Geräte (A, B) vorgesehen ist und/oder wird, mit wenigstens einer weiteren virtuellen Steuerung (A.1, A.2, A.3, B.1, B.2, B.3), die auf wenigstens einem anderen der auf Geräteeben gekoppelten Geräte (A, B) vorgesehen ist und/oder wird, gekoppelt wird.

2. Verfahren nach Anspruch 1, **dadurch gekennzeichnet, dass**
für die Kopplung (4) auf der Geräteebene von den Geräten (A, B) oder für die Geräte (A, B) Geräte-Koppelnachrichten versendet werden, bevorzugt über Redundanz-Schnittstellen (3), über welche die Geräte (A, B) miteinander verbunden sind und/oder nur von oder für auf Gerätebene nicht gekoppelten Geräten (A, B), insbesondere, wobei sich ein Gerät (A, B) mit wenigstens einem weiteren Gerät (A, B) koppelt, wenn es eine von dem oder für das wenigstens eine weitere Gerät (A, B) gesendete Geräte-Koppelnachricht empfängt und nicht auf Geräteebene gekoppelt ist, bevorzugt, wobei die Kopplung (4) auf Gerätebene durch Versenden einer Geräte-Bestätigungsnachricht an das wenigstens eine weitere Gerät (A, B), insbesondere durch das Gerät (A, B), bestätigt wird, bevorzugt, wobei für den Fall, dass wenigstens zwei auf Geräteebene miteinander gekoppelte Geräte (A. B) ihre Kopplung verlieren, sie den Versand von Geräte-Koppelnachrichten, insbesondere automatisch, wieder aufnehmen.

3. Verfahren nach Anspruch 2, **dadurch gekennzeichnet, dass**
die Geräte-Koppelnachrichten Informationen zu dem jeweiligen Gerät (A, B), insbesondere eine Adresse und/oder einen Identifikator und/oder eine Typenangabe des jeweiligen Gerätes (A, B), umfassen, bevorzugt, wobei sich ein Gerät (A, B) nur in demjenigen Fall mit wenigstens einem weiteren Gerät (A, B) auf Geräteebene koppelt, dass eine Überprüfung von in der Geräte-Koppelnachricht enthaltener Information ergeben hat, dass bestimmte Anforderungen von dem wenigstens einen weiteren Gerät (A, B) erfüllt werden.

4. Verfahren nach Anspruch 2 oder 3, **dadurch gekennzeichnet, dass** für den Fall, dass ein Gerät (A, B) von mehr als einem weiteren oder für mehr als ein weiteres Gerät (A, B), optional des gleichen Typs, oder von mehr als einer vorgegebenen Maximalanzahl von zwei oder mehr weiteren oder für mehr als eine vorgegebene Maximalanzahl von zwei oder mehr weiteren Geräten (A, B), optional des gleichen Typs, Geräte-Koppelnachrichten empfängt, das Gerät (A, B) in einen Kopplungsfehlerzustand übergeht, in dem es keine Kopplung auf Geräteebene eingeht, bevorzugt, wobei der Kopplungsfehlerzustand des Gerätes (A, B) insbesondere automatisch wieder aufgehoben wird, wenn das Gerät (A, B) nur noch Geräte-Koppelnachrichten von genau einem weiteren oder für genau ein weiteres Gerät (A, B) oder höchstens von der vorgegebene Maximalanzahl oder für die vorgegebene Maximalanzahl weiterer Geräte (A, B) empfängt.

5. Verfahren nach einem der vorhergehenden Ansprüche, **dadurch gekennzeichnet, dass** auf den Geräten (A, B) jeweils eine Geräte-Kopplungs-Applikation (6) installiert ist, welche die Kopplung (4) auf Geräteebene zumindest teilweise durchführt.

6. Verfahren nach einem der vorhergehenden Ansprüche, **dadurch gekennzeichnet, dass** für die Kopplung (5) auf der Steuerungsebene von den virtuellen Steuerungen (A.1, A.2, A.3, B.1, B.2, B.3) oder für die virtuellen Steuerungen (A.1, A.2, A.3, B.1, B.2, B.3) Steuerungs-Koppelnachrichten versendet werden, insbesondere über einen virtuellen Switch (1) des jeweiligen Gerätes (A, B) und/oder nur von oder für auf Steuerungs-Ebene nicht gekoppelten virtuellen Steuerungen (A.1, A.2, A.3, B.1, B.2, B.3),
bevorzugt, wobei sich eine auf einem Gerät (A, B) vorgesehene virtuelle Steuerung (A.1, A.2, A.3, B.1, B.2, B.3) mit wenigstens einer weiteren auf wenigstens einem weiteren auf Geräteebene gekoppelten Gerät (A, B) vorgesehene virtuellen Steuerung (A.1, A.2, A.3, B.1, B.2, B.3) auf Steuerungsebene koppelt, wenn sie eine von der wenigstens einen weiteren virtuellen Steuerung (A.1, A.2, A.3, B.1, B.2, B.3) oder für die wenigstens eine weitere virtuelle Steuerung (A.1, A.2, A.3, B.1, B.2, B.3) gesendete Steuerungs-Koppelnachricht empfängt und auf Steuerungsebene nicht gekoppelt ist, bevorzugt, wobei die Kopplung (5) auf Steuerungsebene durch Versenden einer Steuerungs-Bestätigungsnachricht an die wenigstens eine weitere virtuelle Steuerung (A.1, A.2, A.3, B.1, B.2, B.3), insbesondere von der virtuellen Steuerung (A.1, A.2, A.3, B.1, B.2, B.3), bestätigt wird, insbesondere, wobei für den Fall, dass wenigstens zwei auf Steuerungsebene miteinander gekoppelte virtuelle Steuerungen (A.1, A.2, A.3, B.1, B.2, B.3) ihre Kopplung verlieren, sie den Versand von Steuerungs-Koppelnachrichten, insbesondere automatisch, wieder aufnehmen.

7. Verfahren nach Anspruch 6, **dadurch gekennzeichnet, dass**
nur von virtuellen Steuerung (A.1, A.2, A.3, B.1, B.2, B.3) Steuerungs-Koppelnachrichten versendet werden, deren Gerät (A, B) mit wenigstens einem weiteren Gerät (A, B) auf Geräteebene gekoppelt ist, bevorzugt, wobei in Reaktion auf die Kopplung eines Gerätes (A, B) mit wenigstens einem weiteren Gerät (A, B) auf Gerätebene mit dem Versand von Steuerungs-Koppelnachrichten von der oder für die wenigstens eine virtuelle Steuerung (A.1, A.2, A.3, B.1, B.2, B.3) des Gerätes (A, B), insbesondere automatisch, begonnen wird.

8. Verfahren nach Anspruch 6 oder 7, **dadurch gekennzeichnet, dass** eine virtuelle Steuerung (A.1, A.2, A.3, B.1, B.2, B.3) nach Empfang einer Steuerungs-Koppelnachricht den Kopplungszustand ihres Gerätes (A, B) bevorzugt automatisch überprüft,
und dass die virtuelle Steuerung (A.1, A.2, A.3, B.1, B.2, B.3) in demjenigen Falle, dass die Überprüfung ergibt, dass ihr Gerät (A, B) auf Geräteebene mit dem wenigstens einen weiteren Gerät (A, B) der wenigstens einen weiteren virtuellen Steuerung (A.1, A.2, A.3, B.1, B.2, B.3) gekoppelt ist, mit der wenigstens einen weiteren virtuellen Steuerung (A.1, A.2, A.3, B.1, B.2, B.3) eine Kopplung (5) auf Steuerungsebene eingeht und andernfalls die empfangene Steuerungs-Koppelnachricht ignoriert.

9. Verfahren nach einem der Ansprüche 6 bis 8, **dadurch gekennzeichnet, dass** die Steuerungs-Koppelnachrichten Informationen zu der jeweiligen virtuellen Steuerung (A.1, A.2, A.3, B.1, B.2, B.3), insbesondere eine Adresse und/oder einen Identifikator und/oder eine Typenangabe der jeweiligen virtuellen Steuerung umfassen, bevorzugt, wobei sich eine virtuelle Steuerung (A.1, A.2, A.3, B.1, B.2, B.3) nur in demjenigen Fall mit wenigstens einer weiteren virtuellen Steuerung (A.1, A.2, A.3, B.1, B.2, B.3) auf Steuerungsebene koppelt, dass eine Überprüfung von in der Steuerungs-Koppelnachricht enthaltener Information ergeben hat, dass bestimmte Anforderungen erfüllt sind, insbesondere ein Name und/oder eine Adresse der wenigstens einen weiteren virtuellen Steuerung (A.1, A.2, A.3, B.1, B.2, B.3) mit einem Namen und/oder einer Adresse der virtuellen Steuerung (A.1, A.2, A.3, B.1, B.2, B.3) zumindest teilweise übereinstimmt, bevorzugt hinsichtlich einer in dem Namen und/oder der Adresse enthaltenen laufenden Nummer.

10. Verfahren nach einem der Ansprüche 6 bis 9, sofern auf Anspruch 5 rückbezogen, **dadurch gekennzeichnet, dass**
die auf dem jeweiligen Gerät (A, B) installierte Geräte-Kopplungs-Applikation (6) für wenigstens eine auf dem jeweiligen Gerät (A, B) vorgesehene virtuelle Steuerung (A.1, A.2, A.3, B.1, B.2, B.3) Steuerungs-Koppelnachrichten versendet und/oder empfängt.

11. Verfahren nach Anspruch 10, **dadurch gekennzeichnet, dass**
für die Kopplung (5) auf Steuerungsebene eine auf einem Gerät (A, B) vorgesehene virtuelle Steuerung (A.1, A.2, A.3, B.1, B.2, B.3) die Geräte-Kopplungs-Applikation (6) ihres Gerätes (A, B) kontaktiert, um mit Hilfe dieser wenigstens eine Steuerungs-Koppelnachricht zu senden, wobei die Geräte-Kopplungs-Applikation (6) dieses Gerätes (A, B) die Geräte-Kopplungs-Applikation (6) wenigstens eines weiteren mit dem Gerät (A, B) auf Geräteebene gekoppelten Gerätes (A, B) kontaktiert, und die wenigstens eine Steuerungs-Koppelnachricht bevorzugt an die Geräte-Kopplungs-Applikation (6) des wenigstens einen weiteren Gerätes (A, B) weiterleitet, insbesondere, wobei die Geräte-Kopplungs-Applikation (6) des wenigstens einen weiteren Gerätes (A, B) die wenigstens eine Steuerungs-Koppelnachricht an wenigstens eine auf ihrem Gerät (A, B) vorgesehene virtuelle Steuerung (A.1, A.2, A.3, B.1, B.2, B.3) weiterleitet, insbesondere, wobei die Geräte-Kopplungs-Applikation (6) die wenigstens eine Steuerungs-Koppelnachricht als Broadcast-Nachricht innerhalb eines auf ihrem Gerät eingerichteten lokalen virtuellen Netzwerkes (12) an mehrere auf ihrem Gerät (A, B) vorgesehene virtuelle Steuerungen (A.1, A.2, A.3, B.1, B.2, B.3) verteilt.

12. Verfahren nach einem der vorhergehenden Ansprüche, **dadurch gekennzeichnet, dass** die virtuellen Steuerungen (A.1, A.2, A.3, B.1, B.2, B.3) jeweils eine Steuerungs-Kopplungs-Applikation (10) umfassen, welche die Kopplung (5) auf Steuerungsebene zumindest teilweise durchführt.

13. Computerprogramm, umfassend Befehle, die, wenn sie auf wenigstens einem Computer, insbesondere Edge-Gerät (A, B), ausgeführt werden, den wenigstens einen Computer, insbesondere das wenigstens eine Edge-Gerät (A, B), veranlassen, die Schritte des Verfahrens nach einem der Ansprüche 1 bis 12 durchzuführen.

14. Computerlesbares Medium, umfassend Befehle, die, wenn sie auf wenigstens einem Computer, insbesondere Edge-Gerät (A, B), ausgeführt werden, den wenigstens einen Computer, insbesondere das wenigstens eine Edge-Gerät (A, B), veranlassen, die Schritte des Verfahrens nach einem der Ansprüche 1 bis 12 durchzuführen.

15. Gerät (A, B), insbesondere Edge-Gerät, umfassend wenigstens einen Prozessor und wenigstens einen Speicher, auf dem ein Computerprogramm gemäß Anspruch 13 abgelegt ist.
